# EUROPÄISCHE PATENTSCHRIFT

(11) **EP 0 621 413 B1**
(45) Veröffentlichungstag und Bekanntmachung des Hinweises auf die Patenterteilung: **04.09.1996**
(21) Anmeldenummer: 94102052.1
(22) Anmeldetag: 10.02.1994
(51) Int. Cl.: F16D 3/76

(54) **Drehelastische Kupplung**
Rotationally resilient coupling
Accouplement élastique en rotation

(30) Priorität: 17.04.1993 DE 4312577
(43) Veröffentlichungstag der Anmeldung: 26.10.1994
(73) Patentinhaber: Firma Carl Freudenberg, D-69469 Weinheim (DE)
(72) Erfinder: Morr, Jürgen, D-69483 Waldmichelbach (DE); Hönlinger, Herwig, D-68649 Gross-Rohrheim (DE); Eichhorn, Jürgen, D-69469 Weinheim (DE)

(56) Entgegenhaltungen:
- DE-A- 2 311 985
- DE-A- 2 505 935
- DE-A- 2 729 927
- DE-A- 3 334 881
- DE-A- 4 018 596

## Beschreibung

Die Erfindung betrifft eine drehelastische Kupplung für ein um eine Achse rotierendes Maschinenteil, umfassend einen Innenring mit einer axial in einer Richtung offenen Nut, die durch zwei sich in axialer Richtung erstreckende Flankenflächen und eine sich in radialer Richtung erstreckende Bodenfläche begrenzt ist, einen Außenring mit einem sich parallel zu der Achse erstreckenden, ringförmigen Steg, der in der Nut aufgenommen, durch einen als Gleitlager ausgebildeten Führungsring auf der einen Flankenfläche abgestützt und durch einen Dämpfungsring aus elastomerem Werkstoff mit der anderen Flankenfläche verbunden ist.

Eine derartige Kupplung ist aus der DE-PS 40 18 596 bekannt. Die Ringe sind in radialer Richtung mittels einer separat erzeugten und nachträglich montierten Lagerbuchse aufeinander abgestützt, was eine Übertragung von radialen Kräften ermöglicht und die Verwendung innerhalb von Riemenscheiben und/oder von Torsionsschwingungstilgern begünstigt. Durch die radial ineinanderliegende Anordnung des Führung- und des Dämpfungsringes ergibt sich eine geringe, axiale Baulänge der Kupplung. Die Herstellung ist unter wirtschaftlichen Gesichtspunkten wenig befriedigend.

Aus der DE 33 34 881 A1 ist eine Gummikupplung bekannt, bestehend aus zwei einen Spalt begrenzenden Maschinenteilen, die relativ zueinander und parallel zu dem Spalt bewegbar sind sowie aus wenigstens einem in dem Spalt angeordneten Federkörper aus gummielastischem Werkstoff, der die beiden Maschinenteile miteinander verbindet. Der Federkörper weist wenigstens einen einstückig angeformten Ansatz auf, wobei der Ansatz eine Haftfläche aufweist und das Maschinenteil und der Federkörper nur durch diese Haftfläche verbunden sind. Die sich in axialer Richtung erstreckende Flankenfläche des Maschinenteils ist dem Federkörper mit radialem Abstand benachbart zugeordnet, wobei innerhalb des durch den Abstand gebildeten Spalts Luft oder eine Dämpfungsflüssigkeit angeordnet ist. Eine reibungsbehaftete Relativbewegung zwischen der Flankenfläche des Maschinenteils und dem Federkörper findet nicht statt.

Der Erfindung liegt die Aufgabe zugrunde, eine Kupplung der vorbekannten Art derart weiterzuentwickeln, daß sich eine in wirtschaftlicher Hinsicht kostengünstigere Herstellbarkeit ergibt.

Diese Aufgabe wird erfindungsgemäß mit den Merkmalen von Anspruch 1 gelöst. Auf vorteilhafte Ausgestaltungen nehmen die Unteransprüche Bezug.

Die Erfindung wird bei einer Kupplung der eingangs genannten Art dadurch gelöst, daß der Führungsring und der Dämpfungsring einstückig ineinander übergehend ausgebildet sind und aus einem übereinstimmenden elastomerem Werkstoff bestehen.

Die wirtschaftliche Herstellbarkeit wird dadurch begünstigt, daß das Gleitlager und das Dämpfungselement einstückig ineinander übergehend ausgebildet sind und aus einem übereinstimmenden elastomeren Werkstoff bestehen. Der Führungsring und der Dämpfungsring können durch zumindest einen Ansatz verbunden sein, der den in der Nut aufgenommenen Steg des Außenrings durchdringt. Es ist des weiteren und/oder alternativ möglich, daß der Führungsring und der Dämpfungsring durch einen den in der Nut aufgenommenen Steg des Außenrings im Bereich seiner Stirnseite umgreifenden Stützring verbunden sind und daß der Stützring die Bodenfläche der Nut anliegend berührt. Hierdurch ergibt sich zusätzlich eine axiale Abstützung der beiden Maschinenteile aufeinander.

Der Führungsring kann auf der der Flankenfläche der Nut zugewandten Seite gleichmäßig in Umfangsrichtung verteilte, mit einem Schmierstoff gefüllte Schmiermitteltaschen aufweisen, beispielsweise Schmiermitteltaschen, die mit Vaseline und/oder Fett gefüllt sind. Die Abriebbeständigkeit des Führungsringes wird hierdurch merklich verbessert.

Die erfindungsgemäße Kupplung besteht im einfachsten Fall aus nur zwei Teilen, die besonders einfach zusammenfügbar sind. Für die wirtschaftliche Herstellbarkeit der Kupplung ist das von großem Vorteil.

Der für die Herstellung und Anformung des Führungsringes und des Dämpfungsringes zur Anwendung gelangende elastomere Werkstoff muß sowohl gute Dämpfungseigenschaften aufweisen als auch einen geringen abrasiven Verschleiß. Geeignete Werkstoffe weisen eine Härte Shore A von 35 bis 90, bevorzugt von 45 bis 85 auf.

Der Dämpfungsring ist mit beiden Maschinenteilen adhäsiv verbunden. Hierdurch sind während einer langen Gebrauchsdauer gleichbleibend gute Dämpfungseigenschaften gewährleistet. Zweckmäßigerweise ist der Dämpfungsring rotationssymmetrisch gestaltet.

Eine weitere Verbesserung der schwingungsdämpfenden Eigenschaften kann erzielt werden, in dem an zumindest einem Maschinenteil ein Trägheitsring mittels eines zweiten Dämpfungsringes aus elastomerem Werkstoff festgelegt wird.

Der Trägheitsring und der zweite Dämpfungsring können dabei in einer mit dem Dämpfungsring und dem Führungsring übereinstimmenden Radialebene angeordnet sein, was das Auftreten von Kippmomenten verhindert. Insbesondere für mit hoher Drehzahl umlaufende Kupplungen ist eine solche Ausbildung von großem Vorteil.

Der zweite Dämpfungsring kann aus elastomerem Werkstoff bestehen und unter radialer Vorspannung in den Ringspalt zwischen dem Trägheitsring und dem relativ verdrehbaren Maschinenteil eingepreßt sein. Die Festlegung beruht bei einer solchen Ausführung ausschließlich auf der Ausnutzung von Haftreibungseffekten. Eine gegenseitige Verklebung der einander berührenden Teile ist ebenfalls möglich.

Der zweite Dämpfungsring kann einen einstückigen Bestandteil des den Führungsring und den Dämpfungsring umfassenden Werkstoffkörpers bilden. Die Herstellung ist in diesem Falle ganz besonders einfach. Sie erfordert lediglich die Verwendung eines einzigen Formwerkzeuges und gewährleistet eine ausgezeichnete Rotationssymmetrie der gebrauchsfertigen Kupplung, ohne daß es hierzu besonderer Auswuchtmaßnahmen bedarf.

Die gute radiale Abstützung der Maschinenteile aufeinander ermöglicht die Übertragung großer radialer Kräfte, was es ermöglicht, die Kupplung innerhalb von Riemenscheiben und/oder von Torsionsschwingungstilgern problemlos zu verwenden. Dabei kann auch eines der Maschinenteile selbst einen Bestandteil eines solchen Torsionsschwingungstilgers und/oder einer Riemenscheibe bilden. Die sich ergebende Einheit kann insbesondere beim Antrieb von Nebenaggregaten einer Verbrennungskraftmaschine zur Anwendung gelangen.

Falls der Führungsring und der Dämpfungsring durch zumindest einen den Steg durchdringenden Ansatz verbunden sind ergibt sich eine formschlüssige Festlegung beider Ringe an dem Steg. Für die Dauerhaltbarkeit ist das von großem Vorteil.

Falls im Bereich der Gleitfläche des Führungsringes schmiermittelgefüllte Schmiermitteltaschen vorgesehen sind, ergibt sich neben einer Verringerung des Verschleißes eine Verbesserung der Relativverdrehbarkeit. Der Übergang von der Haft- in die Gleitreibung erfolgt durch den wesentlich verminderten Reibungskoeffizienten gleichmäßig und allmählich.

Um zu verhindern, daß das Schmiermittel vorzeitig verloren geht hat es sich als vorteilhaft bewährt, wenn die Reibungszone axial zumindest in einer Richtung durch eine umlaufende Dichtlippe gegenüber der Gegenfläche abgedichtet ist, die einstückig mit dem Führungsring ausgebildet ist. Ergänzend wird durch eine solche Ausbildung eine Verschmutzung der Umgebung durch das Schmiermittel verhindert. Eine ausreichend große elastische Anpressung der Dichtlippe an das relativ bewegte Maschinenteil kann dadurch erzielt werden, daß die Dichtlippe bei ihrer Herstellung so dimensioniert wird, daß sich beim Auffügen auf die Gegenfläche eine elastische Deformierung ergibt. Um eine Beschädigung der Dichtlippe während des Fügevorganges zu verhindern hat es sich als vorteilhaft bewährt, wenn diese ein wulstförmig ausgebildetes Profil hat.

Mehrere Ausführungsbeispiele der erfindungsgemäßen drehelastischen Kupplung sind in den Zeichnungen dargestellt und werden im folgenden näher beschrieben.

In Fig. ist ein erstes Ausführungsbeispiel gezeigt, bei dem der Führungsring und der Dämpfungsring einstückig ausgebildet sind und der Führungsring neben einer Radiallagerung auch eine einseitige Axiallagerung umfaßt. Die Vulkanisation beider Ringe erfolgt im gleichen Vulkanisationswerkzeug.

In Fig. 2 ist ein Ausschnitt aus der Kupplung gemäß Fig. 1 in vergrößertem Maßstab dargestellt.

In Fig. 3 ist ein zweites Ausführungsbeispiel gezeigt, bei dem der Führungsring und der Dämpfungsring einstückig ineinander übergehend ausgebildet sind und die Ringe ebenfalls in radialer und axialer Richtung aufeinander abgestützt sind.

In Fig. 4 ist ein drittes Ausführungsbeispiel gezeigt, wobei die Kupplung zusätzlich zur Verbesserung der schwingungsdämpfenden Eigenschaften mit einem Trägheitsring versehen ist, der durch eine Dämpfungsschicht mit einem der Ringe verbunden ist. Die Anordnung von Dämpfungsring und Führungsring entspricht im wesentlichen dem Ausführungsbeispiel aus Fig. 1.

In Fig. 5 ist ein viertes Ausführungsbeispiel gezeigt, ähnlich dem Ausführungsbeispiel aus Fig. 3, wobei die Dämpfungsschicht des Trägheitsringes, der Führungsring und der Dämpfungsring einstückig ineinander übergehend ausgebildet sind.

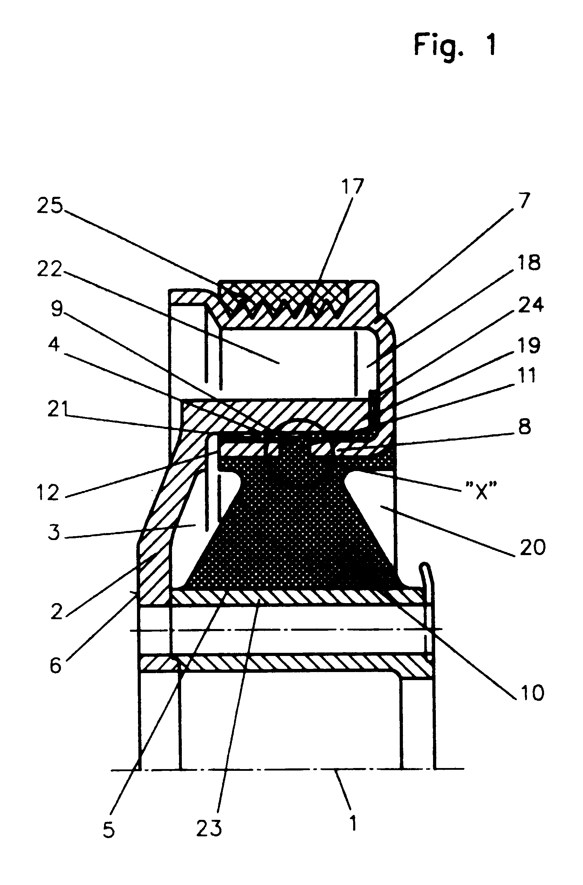

In den Fig. 1 bis 5 ist eine Auswahl aus einer Vielzahl von möglichen Varianten ausgewählt, die hinsichtlich ihrer Ausgestaltung besonders sinnvoll sind.

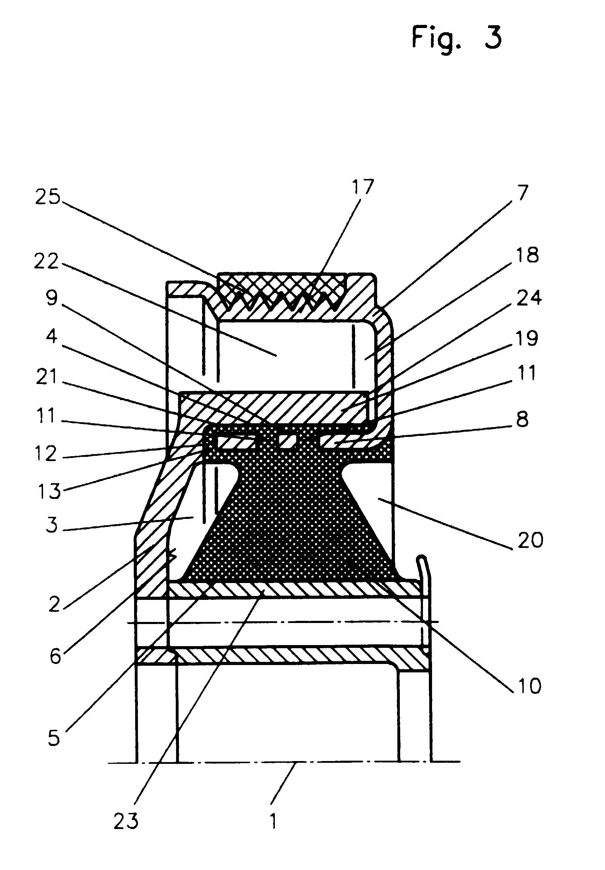

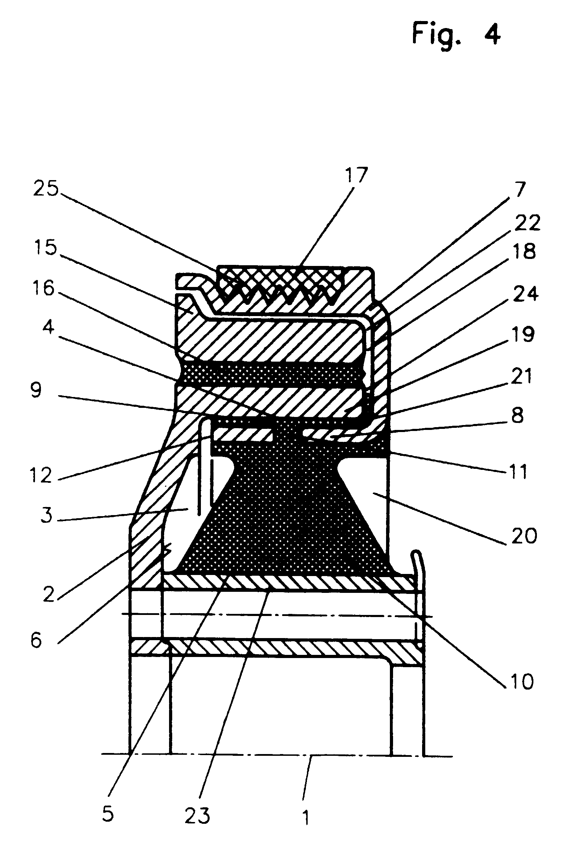

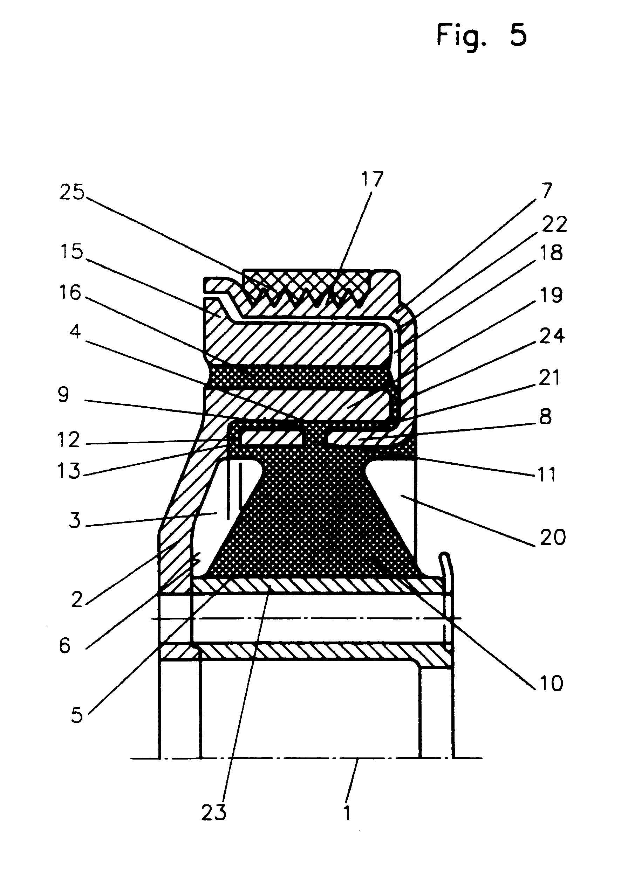

In den Fig. 1 und 3 ist jeweils eine drehelastische Kupplung gezeigt, während in den Fig. 4 und 5 die Kupplung mit einem zusätzlichen Trägheitsring versehen ist.

In den Fig. 1 bis 5 ist jeweils eine drehelastische Kupplung für zwei Maschinenelemente gezeigt, wobei eines der Maschinenelemente mit dem Innenring 2 und das andere Maschinenelement mit dem Außenring 7 verbunden ist. Der Innenring 2 ist in den hier gezeigten Ausführungsbeispielen derart gestaltet, daß er mit dem ersten Maschinenelement verschraubbar ist. Der Außenring 7 ist als Riemenscheibe 17 ausgebildet und kann beispielsweise zum Antrieb des zweiten Maschinenelements, das beispielsweise durch die Lichtmaschine eines Kraftfahrzeugs gebildet sein kann, genutzt werden. Der Innen- und der Außenring 2, 7 haben jeweils eine U-förmige Nut 3, 18, die in entgegengesetzter axialer Richtung geöffnet sind. Die Nuten 3, 18 von Innenring 2 und Außenring 7 sind in radialer Richtung jeweils von einem in axialer Richtung vorspringenden Steg 8, 19 des benachbarten Ringes 7, 2 unterteilt. Durch die Unterteilung ergeben sich insgesamt drei einander in radialer Richtung umschließende Teilräume 20, 21, 22, wobei der Führungsring 9 in einem der Teilräume 20, 21, 22 derart angeordnet und mit einem der Ringe 2, 7 verbunden ist, daß diese zumindest in radialer Richtung aufeinander abgestützt sind. In einem der Teilräume 20, 21, 22, der dem Teilraum mit dem Führungsring 9 benachbart zugeordnet ist, befindet sich zur Schwingungsdämpfung ein Dämpfungsring 10 aus einem elastomeren Werkstoff, wobei der Führungsring 9 und der Dämpfungsring 10 einstückig ineinander übergehend ausgebildet sind. In den hier dargestellten Ausführungsbeispielen ist der Dämpfungsring 9 mit den Ringen 2, 7 adhäsiv verbunden. Der Führungsring 9 besteht in jedem der Ausführungsbeispiele 1 bis 5 aus einem elastomeren Werkstoff.

In Fig. 1 ist der Dämpfungsring 10 innerhalb des ersten Teilraums 20 angeordnet und verbindet den in radialer Richtung inneren Schenkel 23 des Innenrings 2 mit dem in radialer Richtung inneren Steg 8 des Außenrings 7. Die Verbindung erfolgt beispielsweise durch vulkanisieren. Die Ringe 2, 7 können ebenso , wie in allen anderen Ausführungsbeispielen aus einem metallischen oder polymeren Werkstoff bestehen. Innerhalb des zweiten Teilraums 21 ist der Führungsring 9 angeordnet, wobei der Führungsring 9 mit dem radial inneren Steg 8 des Außenrings 7 verbunden ist. Zur axialen Abstützung der beiden Ringe 2, 7 aufeinander, weist der Führungsring 9 ein im wesentlichen L-förmiges Profil auf und umschließt den Steg 19 des Innenrings 2 im Bereich seiner Stirnseite 24. In diesem Ausführungsbeispiel ist es vorgesehen, daß sich die Gleitfläche zwischen der Innenumfangsfläche des Stegs 18 und der Außenumfangsfläche des Führungsrings 9 befindet. Der Führungsring 9 und der Dämpfungsring 10 sind durch einen Ansatz 11, der den Steg 8 durchdringt, einstückig ineinander übergehend ausgebildet.

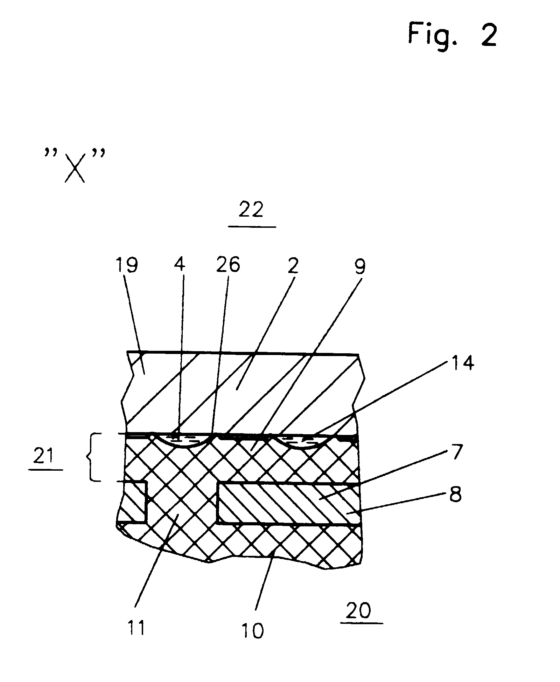

In Fig. 2 ist ein Ausschnitt aus der Kupplung gemäß Fig. 1 in vergrößertem Maßstab dargestellt. Im Bereich der Gleitfläche sind innerhalb des Führungsringes 9 Schmiermitteltaschen 14 angeordnet, die mit einem Schmiermittel befüllt sind, wobei die Schmiermitteltaschen 14 von Dichtlippen 26 umschlossen sind. Eine derartige Ausgestaltung zur Verringerung des abrasiven Verschleißes kann auch bei Ausgestaltungen gemäß der Fig. 3 bis 5 zur Anwendung gelangen.

In Fig. 3 ist ein Ausführungsbeispiel gezeigt, das im wesentlichen dem Ausführungsbeispiel aus Fig. 1 entspricht. Der Führungsring 9 und der Dämpfungsring 10 sind ebenfalls einstückig ineinander übergehend ausgebildet. Sowohl der Führungsring 9 als auch der Dämpfungsring 10 sind adhäsiv und formschlüssig mit dem Steg 8 des Außenringes 7 verbunden. Der Steg 8 weist mehrere Durchbrechungen auf, die sich in radialer Richtung über den Umfang verteilt erstrecken. Die axiale Abstützung der beiden Ringe 2, 7 zueinander erfolgt in diesem Beispiel dadurch, daß die Stirnseite 12 des Stegs 8 von elastomerem Werkstoff umschlossen ist. Der Führungsring 9 berührt die Flankenfläche 4 des Stegs 19 von Innenring 2 verdrehbar anliegend. Der Außenring 7 ist als Riemenscheibe 17 gestaltet und von einem Feinzahnriemen 25 umschlungen.

Die Kupplung aus Fig. 4 entspricht im wesentlichen der Kupplung aus Fig. 1. Innerhalb des dritten Teilraums 22 ist ein Trägheitsring 15 angeordnet, der durch eine Dämpfungsschicht 16 aus elestomerem Werkstoff mit dem Steg 19 des Innenrings 2 adhäsiv verbunden ist. Der Führungsring 9 ist in diesem Ausführungsbeispiel relativ verdrehbar auf dem Steg 19 abgestützt und formschlüssig mit dem Steg 8 des Außenringes 7 verbunden. Um die Gebrauchseigenschaften auf den jeweiligen Anwendungsfall individuell einstellen zu können, sind die Dämpfungsschicht 16 und der Führungsring 9 zweiteilig ausgebildet. Verschiedene Werkstoffe können zur Anwendung gelangen.

Das vierte Ausführungsbeispiel aus Fig. 5 ist dem vorstehend beschriebenen ähnlich. Die Dämpfungsschicht 16, der Führungsring 9 und der Dämpfungsring 10 sind einstückig ineinander übergehend ausgebildet und bestehen aus einem übereinstimmenden Werkstoff.

Zu axialen Abstützung der beiden Ringe 2, 7 ist es vorgesehen, daß der Führungsring 9 die Stirnfläche 12 des Stegs 8 übergreift und gegen die Bodenfläche 6 des Innenrings 2 abgestützt ist.

## Patentansprüche

1. Drehelastische Kupplung für ein um eine Achse (1) rotierendes Maschinenteil, umfassend einen Innenring (2) mit einer axial in einer Richtung offenen Nut (3), die durch zwei sich in axialer Richtung erstreckende Flankenflächen (4. 5) und eine sich in radialer Richtung erstreckende Bodenfläche (6) begrenzt ist, einen Außenring (7) mit einem sich parallel zu der Achse (1) erstreckenden, ringförmigen Steg (8), der in der Nut (3) aufgenommen, durch einen als Gleitlager ausgebildeten Führungsring (9) auf der einen Flankenfläche (4) abgestützt und durch einen Dämpfungsring (10) aus elastomerem Werkstoff mit der anderen Flankenfläche (5) verbunden ist, dadurch gekennzeichnet, daß der Führungsring (9) und der Dämpfungsring (10) einstückig ineinander übergehend ausgebildet sind und aus einem übereinstimmenden elastomerem Werkstoff bestehen.

2. Kupplung nach Anspruch 1, dadurch gekennzeichnet, daß der Führungsring (9) und der Dämpfungsring (10) durch zumindest einen Ansatz (11) verbunden sind, der den in der Nut (3) aufgenommenen Steg (8) des Außenrings (7) durchdringt.

3. Kupplung nach einem der Ansprüche 1 bis 2, dadurch gekennzeichnet, daß der Führungsring (9) und der Dämpfungsring (10) durch einen den in der Nut (3) aufgenommenen Steg (8) des Außenrings (7) im Bereich seiner Stirnseite (12) umgreifenden Stützring (13) verbunden sind und daß der Stützring (13) die Bodenfläche (6) der Nut (3) anliegend berührt.

4. Kupplung nach einem der Ansprüche 1 bis 3, dadurch gekennzeichnet, daß der Führungsring (9) auf der der Flankenfläche (4) der Nut (3) zugewandten Seite gleichmäßig in Umfangsrichtung verteilte, mit einem Schmierstoff gefüllte Schmiermitteltaschen (14) aufweist.

## Claims

1. A torsionally elastic coupling for a machine component rotating about an axis (1), comprising an inner ring (2) with a groove (3) which is open axially in one direction and is bounded by two axially extending flank surfaces (4, 5) and a radially extending bottom surface (6), further comprising an outer ring (7) with an annular web (8) which extends parallel to the axis (1) and, having been accommodated in the groove (3), is supported on one flank surface (4) by a guide ring (9) designed as a sliding-contact bearing and is connected to the other flank surface (5) by a damping ring (10) made of elastomeric material, characterized in that the guide ring (9) and the damping ring (10) are designed to merge integrally into one another and are composed of a matching elastomeric material.

2. A coupling according to claim 1, characterized in that the guide ring (9) and the damping ring (10) are connected by at least one extension (11), which passes through the web (8) - accommodated in the groove (3) - of the outer ring (7).

3. Coupling according to either of claims 1 and 2, characterized in that the guide ring (9) and the damping ring (10) are connected by a supporting ring (13) which reaches around the web (8) - accommodated in the groove (3) - of the outer ring (7) in the region of its end (12) and in that the supporting ring (13) touches the bottom surface (6) of the groove (3), resting against it.

4. A coupling according to any of claims 1 to 3, characterized in that the guide ring (9) has, on the side facing the flank surface (4) of the groove (3), lubricant pockets (14) which are distributed uniformly in the circumferential direction and are filled with a lubricant.

## Revendications

1. Accouplement élastique en rotation pour une pièce de machine tournant autour d'un axe (1), comprenant une bague intérieure (2) avec une rainure (3) ouverte axialement dans un sens, qui est limitée par deux surfaces de flanc (4,5) s'étendant dans le sens axial et une surface de fond s'étendant dans le sens radial (6), une bague extérieure (7) avec un élément de liaison (8) annulaire s'étendant parallèlement à l'axe (1), lequel reposant dans la rainure (3), est supporté par une bague de guidage (9) conçue comme un palier lisse sur l'une des surfaces de flanc (4) et relié par une bague d'amortissement (10) en matériau élastomère à l'autre surface de flanc (5), caractérisé en ce que la bague de guidage (9) et la bague d'amortissement (10) forment une seule pièce l'une passant dans l'autre et sont en un matériau élastomère correspondant.

2. Accouplement selon la revendication 1, caractérisé en ce que la bague de guidage (9) et la bague d'amortissement (10) sont réunies par au moins une embase (11) qui traverse l'élément de liaison (8) reposant dans la rainure (3) de la bague extérieure (7).

3. Accouplement selon l'une des revendications 1 à 2, caractérisé en ce que la bague de guidage (9) et la bague d'amortissement (10) sont réunies par une bague d'appui (13) enveloppant l'élément de liaison (8) reposant dans la rainure (3), de la bague extérieure (7) dans la zone de sa face avant (12) et en ce que la bague d'appui (13) vient toucher de façon contiguè la surface de fond (6) de la rainure (3).

4. Accouplement selon l'une des revendications 1 à 3, caractérisé en ce que la bague de guidage (9) comporte sur le côté tourné vers la surface de flanc (4) de la rainure (3), des creux de lubrification (14) remplis d'un lubrifiant, répartis de façon régulière sur la circonférence.
